(19) Europäisches Patentamt
European Patent Office
Office européen des brevets

(11) **EP 4 613 898 A1**

(12) **EUROPEAN PATENT APPLICATION**
published in accordance with Art. 153(4) EPC

(43) Date of publication:
**10.09.2025 Bulletin 2025/37**

(21) Application number: **23918494.8**

(22) Date of filing: **20.09.2023**

(51) International Patent Classification (IPC):
*C22C 38/00* (2006.01)   *C21D 8/10* (2006.01)
*C21D 9/08* (2006.01)   *C22C 38/58* (2006.01)
*C22C 38/60* (2006.01)

(52) Cooperative Patent Classification (CPC):
**C21D 8/10; C21D 9/08; C22C 38/00; C22C 38/58; C22C 38/60**

(86) International application number:
**PCT/JP2023/034007**

(87) International publication number:
**WO 2024/157537 (02.08.2024 Gazette 2024/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.01.2023 JP 2023010189**

(71) Applicant: JFE Steel Corporation
**Tokyo 100-0011 (JP)**

(72) Inventors:
• **MATSUMOTO Akihide**
  **Tokyo 100-0011 (JP)**
• **IWATA Naomichi**
  **Tokyo 100-0011 (JP)**
• **IDE Shinsuke**
  **Tokyo 100-0011 (JP)**

(74) Representative: **Haseltine Lake Kempner LLP**
**Bürkleinstrasse 10**
**80538 München (DE)**

(54) **ELECTRIC RESISTANCE WELDED STEEL PIPE AND LINE PIPE**

(57)   An electric resistance welded steel pipe with excellent SSC resistance is provided.

An electric resistance welded steel pipe includes a base metal zone and an electric resistance weld. When the electric resistance welded steel pipe is tested by a Vickers test with a load of 10 gf with respect to a location 1 mm deep from an inner surface of the electric resistance weld, a location 1 mm deep from an outer surface of the electric resistance weld, a location 1 mm deep from an inner surface of the base metal zone, and a location 1 mm deep from an outer surface of the base metal zone, indentations in each of the locations have a ratio of the number of indentations with a hardness greater than or equal to an average hardness plus 40 HV of 0.30 or less, and a ratio of the number of indentations having an eccentricity E of 0.20 or more of 0.40 or less. The eccentricity E is a value calculated from expression (1) below where $L_{max}$, $L_{min}$, and $L_{ave}$ are the maximum value, the minimum value, and the average, respectively, of the lengths of line segments OA, OB, OC, and OD where O is the intersection point of the diagonals of the indentation, and A, B, C, and D are the vertices of the indentation in counterclockwise order.

$$E = (L_{max} - L_{min})/L_{ave} \cdots (1)$$

EP 4 613 898 A1

Processed by Luminess, 75001 PARIS (FR)

## Description

Technical Field

The present invention relates to electric resistance welded steel pipes and line pipes, and particularly to electric resistance welded steel pipes suitably used as line pipes.

Background Art

Steel pipes for line pipes that are used in long-distance transport of crude oil, natural gas, and the like require high strength in order to withstand a high pressure of internal fluid for better transport efficiency.

On the other hand, steel pipes for line pipes also require high resistance to sulfide stress corrosion cracking (SSC) in view of the fact that the inner surface of line pipes comes into contact with highly corrosive fluids containing hydrogen sulfide.

In general, the SSC resistance of steel materials is lowered as the steel materials are increased in strength. Particularly for steel pipes for line pipes, reducing the hardness (strength) of the inner surface of the steel pipes that will come into contact with fluids is important in order to ensure SSC resistance.

Patent Literature 1 proposes a steel sheet for line pipes in which the variation in surface hardness is controlled. Patent Literature 2 proposes an electric resistance welded steel pipe for line pipe in which the absolute value of surface hardness is controlled.

Citation List

Patent Literature

PTL 1: Japanese Patent No. 6521197
PTL 2: Japanese Unexamined Patent Application Publication No. 2017-179482

Summary of Invention

Technical Problem

However, even the control of surface hardness of steel sheets or steel pipes as described in Patent Literature 1 or Patent Literature 2 sometimes fails to offer sufficient SSC resistance because some grains or the vicinity of grain boundaries forms local hard regions that serve as an origin of SSC.

The "local hard regions" are very microscopic and are difficult to evaluate because they are averaged out by the surrounding low-stress regions in a usual Vickers hardness test.

The present invention has been made in view of the circumstances discussed above. It is therefore an object of the present invention to provide an electric resistance welded steel pipe with excellent SSC resistance.

In the present invention, "excellent SSC resistance" means that steel subjected to a four-point bending corrosion test described later is not cracked and shows a depth of pitting corrosion of less than 250 $\mu$m and a number density of pitting corrosion of 5.0 pits/mm or less.

Solution to Problem

After extensive studies, the present inventors have found that the nonuniformity of the shape of indentations in a prescribed Vickers test (indentations left on the test specimen after a Vickers test, also known as Vickers indentations) results from large local variations in hardness and hence is an indicator of low SSC resistance.

The present inventors have further found that local variations in hardness can be reduced by lowering the proportion of hard microstructures having a high dislocation density and by rendering such microstructures less connected.

The present invention has been completed based on the above findings and includes the following gist.

[1] An electric resistance welded steel pipe including a base metal zone and an electric resistance weld, wherein when the electric resistance welded steel pipe is tested by a Vickers test with a load of 10 gf with respect to a location 1 mm deep from an inner surface of the electric resistance weld, a location 1 mm deep from an outer surface of the electric resistance weld, a location 1 mm deep from an inner surface of the base metal zone, and a location 1 mm deep from an outer surface of the base metal zone, indentations in each of the locations have:

a ratio of the number of indentations with a hardness greater than or equal to an average hardness plus 40 HV of 0.30 or less, and
a ratio of the number of indentations having an eccentricity E of 0.20 or more of 0.40 or less, wherein
the eccentricity E is a value calculated from expression (1) below where $L_{max}$, $L_{min}$, and $L_{ave}$ are the maximum value, the minimum value, and the average, respectively, of the lengths of line segments OA, OB, OC, and OD where O is the intersection point of the diagonals of the indentation, and A, B, C, and D are the vertices of the indentation in counterclockwise order,

$$E = (L_{max} - L_{min})/L_{ave} \quad \cdots (1).$$

[2] The electric resistance welded steel pipe according to [1], wherein the base metal zone has a chemical composition including, in mass%:

C: 0.020% or more and 0.200% or less,
Si: 0.50% or less,
Mn: 0.30% or more and 2.00% or less,
P: 0.050% or less,
S: 0.0200% or less,
Al: 0.005% or more and 0.100% or less, and
N: 0.0100% or less,
and further optionally including one, or two or more selected from:

Nb: 0.080% or less,
V: 0.080% or less,
Ti: 0.080% or less,
Cu: 0.50% or less,
Ni: 0.50% or less,
Cr: 0.50% or less,
Mo: 0.50% or less,
Ca: 0.0050% or less,
B: 0.0050% or less,
Mg: 0.020% or less,
Zr: 0.020% or less, and
REM: 0.020% or less,
the balance being Fe and incidental impurities.

[3] The electric resistance welded steel pipe according to [1] or [2], wherein a steel microstructure at half the wall thickness of the base metal zone has:

an average grain size of 15.0 $\mu$m or less; and
steel microstructures at a location 1 mm deep from the inner surface of the electric resistance weld, at a location 1 mm deep from the outer surface of the electric resistance weld,
at a location 1 mm deep from the inner surface of the base metal zone, and at a location 1 mm deep from the outer surface of the base metal zone each have:

a number density of high-KAM value regions having a KAM value of 3.0 or more and 5.0 or less of 1000 regions/mm$^2$ or
more, and an area ratio of high-KAM value regions having an equivalent circular diameter of 5.0 $\mu$m or more of 0.050 or less.

[4] A line pipe using the electric resistance welded steel pipe described in any one of [1] to [3].

Advantageous Effects of Invention

The electric resistance welded steel pipe provided according to the present invention has excellent SSC resistance.

Brief Description of Drawings

[Fig. 1] Fig. 1 is a schematic view illustrating points in a Vickers indentation.
[Fig. 2] Fig. 2 is a schematic view illustrating locations in an electric resistance weld where the Vickers hardness is tested.
[Fig. 3] Fig. 3 is a schematic view illustrating locations in a base metal zone where the Vickers hardness is tested.
[Fig. 4] Fig. 4 is a schematic view illustrating an electric resistance weld in a cross section perpendicular to the direction of the pipe axis.

Description of Embodiments

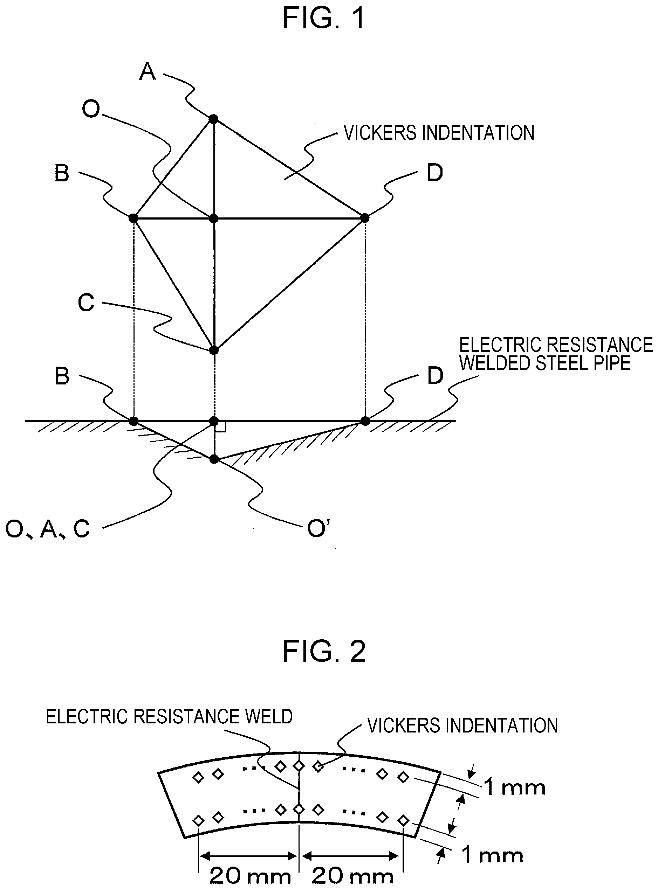

An electric resistance welded steel pipe of the present invention will be described below.
First, the reasons as to why the mechanical properties of the electric resistance welded steel pipe of the present invention are limited will be described.
The electric resistance welded steel pipe of the present invention includes a base metal zone and an electric resistance weld. When the electric resistance welded steel pipe is tested by a Vickers test with a load of 10 gf with respect to a location 1 mm deep from the inner surface of the electric resistance weld, a location 1 mm deep from the outer surface of the electric resistance weld, a location 1 mm deep from the inner surface of the base metal zone, and a location 1 mm deep from the outer surface of the base metal zone, the indentations in each of the above locations have a ratio of the number of indentations with a hardness greater than or equal to the average hardness plus 40 HV of 0.30 or less, and a ratio of the number of indentations having an eccentricity E of 0.20 or more of 0.40 or less. The ratio of the number of indentations will be also written simply as the ratio of indentations hereinbelow. As illustrated in Fig. 1, the eccentricity E is a value calculated from expression (1) below where $L_{max}$, $L_{min}$, and $L_{ave}$ are the maximum value, the minimum value, and the average, respectively, of the lengths of line segments OA, OB, OC, and OD where O is the intersection point of the diagonals of the Vickers indentation, and A, B, C, and D are the vertices of the indentation in counterclockwise order,

$$E = (L_{max} - L_{min})/L_{ave} \cdots (1).$$

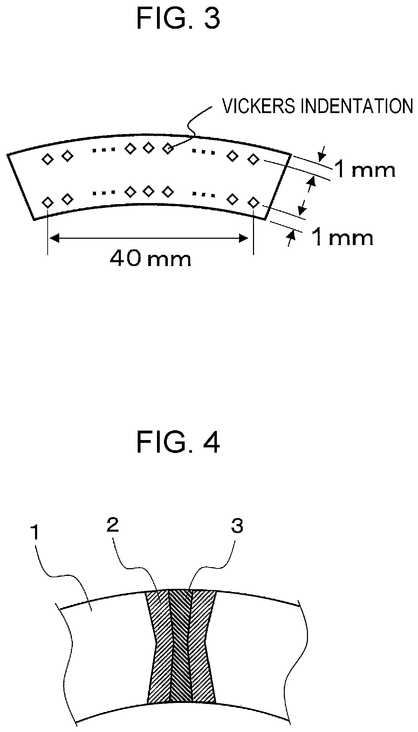

If the 10 gf load Vickers test with respect to a plurality of sites in each of the above locations at the predetermined depth shows that the electric resistance welded steel pipe has a high ratio of indentations with a hardness greater than or equal to the average hardness plus 40 HV, the electric resistance welded steel pipe contains a high proportion of hard regions and thus exhibits low SSC resistance. In the present invention, the ratio of indentations with a hardness greater than or equal to the average hardness plus 40 HV is limited to 0.30 or less. A lower ratio of indentations with a hardness greater than or equal to the average hardness plus 40 HV is more preferable. However, excessive reduction of the ratio increases production costs and production loads. Thus, the ratio of such indentations is preferably 0.01 or more. The ratio of indentations is more preferably 0.02 or more.
If the above test results in a high ratio of indentations having an eccentricity E of 0.20 or more, the electric resistance welded steel pipe has large local variations in hardness and thus exhibits low SSC resistance. In the present invention, the ratio of indentations having an eccentricity E of 0.20 or more is limited to 0.40 or less. A lower ratio of indentations having an eccentricity E of 0.20 or more is more preferable. However, excessive reduction of the ratio increases production costs and production loads. Thus, the ratio of such indentations is preferably 0.01 or more. The ratio of indentations is more preferably 0.02 or more.
For both the electric resistance weld and the base metal zone, the Vickers test is performed with a load of 10 gf with respect to a cross section perpendicular to the direction of the pipe axis as the measurement surface in accordance with the method described in JIS Z 2244 (2020). As illustrated in Fig. 2, the electric resistance weld is tested at a location 1 mm deep from the inner surface and at a location 1 mm deep from the outer surface by being depressed each at 201 points that are continuous with 0.2 mm intervals in the circumferential direction in a range extending 20 mm from the electric resistance weld to the left side and to the right side. As illustrated in Fig. 3, the base metal zone is tested at a location 1 mm deep from the inner surface and at a location 1 mm deep from the outer surface by being depressed each at 201 points that are continuous with 0.2 mm intervals in the circumferential direction in a range extending 40 mm from a position 90 degrees away from the electric resistance weld in the circumferential direction. For each indentation, the Vickers hardness is calculated and the lengths of the line segments OA, OB, OC, and OD illustrated in Fig. 1 are measured, thereby determining $L_{max}$, $L_{min}$, and $L_{ave}$. The point O is the intersection point of the plane ABCD and the perpendicular line drawn from the intersection point **O' of** the diagonals of the indentation onto the plane ABCD. That is, the lengths of the line segments OA, OB, OC, and OD can be each measured on a microscopic image. Subsequently, the ratio of the number of indentations with a hardness greater than or equal to the average hardness plus 40 HV, and the ratio of the number of indentations having an eccentricity E of 0.20 or more are determined for each of the indentations at the location 1 mm deep from the inner surface of the electric resistance weld, the indentations at the location 1 mm deep from the outer surface of the electric resistance weld, the indentations at the location 1 mm deep from the inner surface of the base metal zone, and the indentations at the location 1 mm deep from the outer surface of the base metal zone. The average hardness is the average (the arithmetic average) of the Vickers hardness values calculated from the indentations in each location at the predetermined depth.

The base metal zone of the electric resistance welded steel pipe of the present invention preferably has a chemical composition including, in mass%, C: 0.020% or more and 0.200% or less, Si: 0.50% or less, Mn: 0.30% or more and 2.00% or less, P: 0.050% or less, S: 0.0200% or less, Al: 0.005% or more and 0.100% or less, and N: 0.0100% or less, and optionally further including one, or two or more selected from Nb: 0.080% or less, V: 0.080% or less, Ti: 0.080% or less, Cu: 0.50% or less, Ni: 0.50% or less, Cr: 0.50% or less, Mo: 0.50% or less, Ca: 0.0050% or less, B: 0.0050% or less, Mg: 0.020% or less, Zr: 0.020% or less, and REM: 0.020% or less, with the balance being Fe and incidental impurities.

The preferred chemical composition of the base metal zone of the electric resistance welded steel pipe of the present invention will be described below. In the present specification, "%" indicating the content of an element in the chemical composition means "mass%" unless otherwise specified.

C: 0.020% or more and 0.200% or less

Carbon is an element that increases the strength of steel by solid solution strengthening. Furthermore, carbon is an element that enhances the hardenability of steel and thereby reduces the size of grains to increase the strength of steel and also to increase the number density of high-KAM value regions described later. In order to obtain these effects, it is preferable to add 0.020% or more carbon. However, excessive addition of carbon leads to excessive formation of hard pearlite, martensite, and austenite and increases the ratio of indentations (Vickers indentations) with a hardness greater than or equal to the average hardness plus 40 HV. In addition, the ratio of indentations having an eccentricity E of 0.20 or more is increased. Furthermore, the area ratio of high-KAM value regions having an equivalent circular diameter of 5.0 $\mu$m or more is increased. Thus, the C content is preferably 0.200% or less. The C content is more preferably 0.025% or more, and further preferably 0.030% or more. The C content is more preferably 0.180% or less, and further preferably 0.170% or less.

Si: 0.50% or less

Silicon is an element that increases the strength of steel by solid solution strengthening. In order to obtain this effect, it is preferable to add 0.02% or more silicon. However, excessive addition of silicon increases the ratio of indentations with a hardness greater than or equal to the average hardness plus 40 HV. Furthermore, the ratio of indentations having an eccentricity E of 0.20 or more is increased. Thus, the Si content is preferably 0.50% or less. The Si content is more preferably 0.05% or more, and further preferably 0.08% or more. The Si content is more preferably 0.40% or less, and further preferably 0.30% or less.

Mn: 0.30% or more and 2.00% or less

Manganese is an element that increases the strength of steel by solid solution strengthening. Furthermore, manganese is an element that enhances the hardenability of steel and thereby reduces the size of grains to increase the strength of steel and also to increase the number density of high-KAM value regions. In order to obtain these effects, it is preferable to add 0.30% or more manganese. However, excessive addition of manganese leads to excessive formation of hard martensite and austenite, and increases the ratio of indentations with a hardness greater than or equal to the average hardness plus 40 HV. In addition, the ratio of indentations having an eccentricity E of 0.20 or more is increased. Furthermore, the area ratio of high-KAM value regions having an equivalent circular diameter of 5.0 $\mu$m or more is increased. Thus, the Mn content is preferably 2.00% or less. The Mn content is more preferably 0.40% or more, and further preferably 0.50% or more. The Mn content is more preferably 1.90% or less, and further preferably 1.80% or less.

P: 0.050% or less

Phosphorus is segregated at grain boundaries and lowers toughness. Thus, phosphorus is regarded as an incidental impurity and is preferably removed as much as possible. The P content is preferably in the range of 0.050% and less. The P content is more preferably 0.040% or less, and further preferably 0.030% or less. While the lower limit of the P content is not particularly limited, excessive dephosphorization increases the smelting costs and thus the P content is preferably 0.001% or more.

S: 0.0200% or less

In steel, sulfur is usually present as MnS. MnS is thinly elongated in the hot rolling process to adversely affect ductility and toughness. Thus, in the present invention, it is preferable to remove sulfur as much as possible, and the S content is preferably 0.0200% or less. The S content is more preferably 0.0100% or less, and further preferably 0.0050% or less. While the lower limit of the S content is not particularly limited, excessive desulfurization increases the smelting costs and thus the S content is preferably 0.0001% or more.

Al: 0.005% or more and 0.100% or less

Aluminum is an element that acts as a powerful deoxidizing agent. In order to obtain such an effect, it is preferable to add 0.005% or more aluminum. However, excessive addition of aluminum deteriorates weldability and leads to an increased amount of alumina inclusions, resulting in deterioration in surface properties. Thus, the Al content is preferably 0.100% or less. The Al content is more preferably 0.010% or more, and further preferably 0.015% or more. The Al content is more preferably 0.080% or less, and further preferably 0.070% or less.

N: 0.0100% or less

Nitrogen is an incidental impurity and is an element that acts to reduce ductility and toughness by strongly pinning the movement of dislocations. In the present invention, nitrogen is regarded as an impurity and is preferably removed as much as possible. However, up to 0.0100% nitrogen is acceptable. Thus, the N content is controlled to 0.0100% or less. The N content is preferably 0.0080% or less, and further preferably 0.0060% or less. While the lower limit of the N content is not particularly limited, excessive denitrification increases the smelting costs and thus the N content is preferably 0.0010% or more.

The components described above may constitute basic components (essential components) of the base metal zone of the electric resistance welded steel pipe of the present invention. The balance may be Fe and incidental impurities.

Furthermore, the base metal zone of the electric resistance welded steel pipe of the present invention may further optionally contain one, or two or more selected from the following:

Nb: 0.080% or less

Niobium contributes to enhancing the strength of steel by forming fine carbides and nitrides in the steel. Furthermore, niobium is an element that suppresses the coarsening of austenite during hot rolling and thereby contributes to reducing the size of microstructures to increase the strength of steel and also to increase the number density of high-KAM value regions. Niobium may be added as necessary, or the Nb content may be 0%. When niobium is added in order to obtain the above effects, it is preferable that the Nb content be 0.002% or more. However, excessive addition of niobium lowers the number density of high-KAM value regions. Furthermore, the area ratio of high-KAM value regions having an equivalent circular diameter of 5.0 μm or more is increased. Thus, when niobium is added, the Nb content is preferably 0.080% or less. The Nb content is more preferably 0.005% or more, and further preferably 0.010% or more. The Nb content is more preferably 0.070% or less, and further preferably 0.060% or less.

V: 0.080% or less

Vanadium is an element that contributes to enhancing the strength of steel by forming fine carbides and nitrides in the steel. Vanadium may be added as necessary, or the V content may be 0%. When vanadium is added in order to obtain the above effect, it is preferable that the V content be 0.002% or more. However, excessive addition of vanadium lowers the number density of high-KAM value regions. Furthermore, the area ratio of high-KAM value regions having an equivalent circular diameter of 5.0 μm or more is increased. Thus, when vanadium is added, the V content is preferably 0.080% or less. The V content is more preferably 0.005% or more, and further preferably 0.010% or more. The V content is more preferably 0.070% or less, and further preferably 0.060% or less.

Ti: 0.080% or less

Titanium is an element that contributes to enhancing the strength of steel by forming fine carbides and nitrides in the steel, and, due to its high affinity with nitrogen, also contributes to reducing the amount of solute nitrogen in steel. Titanium may be added as necessary, or the Ti content may be 0%. When titanium is added in order to obtain the above effects, it is preferable that the Ti content be 0.002% or more. However, excessive addition of titanium lowers the number density of high-KAM value regions. Furthermore, the area ratio of high-KAM value regions having an equivalent circular diameter of 5.0 μm or more is increased. Thus, when titanium is added, the Ti content is preferably 0.080% or less. The Ti content is more preferably 0.005% or more, and further preferably 0.010% or more. The Ti content is more preferably 0.070% or less, and further preferably 0.060% or less.

Cu: 0.50% or less, Ni: 0.50% or less

Copper and nickel are elements that increase the strength of steel by solid solution strengthening. Furthermore, these elements increase the hardenability of steel and contribute to reducing the size of microstructures to increase the strength of steel and also to increase the number density of high-KAM value regions. Copper and nickel may be added as necessary, or the Cu content and the Ni content may be each 0%. When copper and nickel are added in order to obtain the above effects, it is preferable that the contents of copper and nickel be Cu: 0.01% or more and Ni: 0.01% or more. However, excessive addition of copper and nickel lowers the number density of high-KAM value regions. Furthermore, the area ratio of high-KAM value regions having an equivalent circular diameter of 5.0 μm or more is increased. Thus, when copper and nickel are added, the contents of copper and nickel are preferably Cu: 0.50% or less and Ni: 0.50% or less. The Cu content is more preferably 0.05% or more, and further preferably 0.10% or more. The Ni content is more preferably 0.05% or more, and further preferably 0.10% or more. The Cu content is more preferably 0.40% or less, and further preferably 0.30% or less. The Ni content is more preferably 0.40% or less, and further preferably 0.30% or less.

Cr: 0.50% or less, Mo: 0.50% or less

Chromium and molybdenum are elements that increase the hardenability of steel and contribute to reducing the size of microstructures to increase the strength of steel and also to increase the number density of high-KAM value regions. Chromium and molybdenum may be added as necessary, or the Cr content and the Mo content may be each 0%. When chromium and molybdenum are added in order to obtain the above effects, it is preferable that the contents of chromium and molybdenum be Cr: 0.01% or more and Mo: 0.01% or more. However, excessive addition of chromium and molybdenum lowers the number density of high-KAM value regions. Furthermore, the area ratio of high-KAM value regions having an equivalent circular diameter of 5.0 μm or more is increased. Thus, when chromium and molybdenum are added, the contents of chromium and molybdenum are preferably Cr: 0.50% or less and Mo: 0.50% or less. The Cr content is more preferably 0.05% or more, and further preferably 0.10% or more. The Mo content is more preferably 0.05% or more, and further preferably 0.10% or more. The Cr content is more preferably 0.40% or less, and further preferably 0.30% or less. The Mo content is more preferably 0.40% or less, and further preferably 0.30% or less.

Ca: 0.0050% or less

Calcium is an element that contributes to enhancing the toughness of steel by spheroidizing sulfides, such as MnS, that are thinly elongated in the hot rolling process. Calcium may be added as necessary, or the Ca content may be 0%. When calcium is added in order to obtain the above effect, it is preferable that the Ca content be 0.0005% or more. However, excessive addition of calcium results in the formation of calcium oxide clusters in the steel and deteriorates toughness. Thus, when calcium is added, the Ca content is preferably 0.0050% or less. The Ca content is more preferably 0.0008% or more, and further preferably 0.0010% or more. The Ca content is more preferably 0.0040% or less, and further preferably 0.0035% or less.

B: 0.0050% or less

Boron is an element that lowers transformation start temperature and thereby contributes to reducing the size of microstructures to increase the strength of steel and also to increase the number density of high-KAM value regions. Boron may be added as necessary, or the B content may be 0%. When boron is added in order to obtain the above effects, it is preferable that the B content be 0.0002% or more. However, excessive addition of boron lowers the number density of high-KAM value regions. Furthermore, the area ratio of high-KAM value regions having an equivalent circular diameter of 5.0 μm or more is increased. Thus, when boron is added, the B content is preferably 0.0050% or less. The B content is more preferably 0.0005% or more, and further preferably 0.0008% or more. The B content is more preferably 0.0040% or less, and further preferably 0.0030% or less.

Mg: 0.020% or less, Zr: 0.020% or less, REM: 0.020% or less

Magnesium, zirconium, and REM (rare earth metal(s)) are elements that contribute to reducing the size of microstructures to increase the strength of steel and also to increase the number density of high-KAM value regions. Magnesium, zirconium, and REM may be added as necessary, or the Mg content, the Zr content, and the REM content may be each 0%. When magnesium, zirconium, and REM are added, it is preferable that the contents of magnesium, zirconium, and REM be Mg: 0.0005% or more, Zr: 0.0005% or more, and REM: 0.0005% or more. However, excessive addition of magnesium, zirconium, and REM lowers the number density of high-KAM value regions. Furthermore, the area ratio of high-KAM value regions having an equivalent circular diameter of 5.0 $\mu$m or more is increased. Thus, when magnesium, zirconium, and REM are added, it is preferable that the Mg content be 0.020% or less, the Zr content be 0.020% or less, and the REM content be 0.020% or less. More preferably, the Mg content is 0.010% or less, the Zr content is 0.010% or less, and the REM content is 0.010% or less. Here, REM is a general term for a total of 17 elements including scandium, yttrium, and the lanthanoid elements. One or more of these 17 elements may be added to the steel, and the REM content means the total content of these elements.

The balance is Fe and incidental impurities. Examples of the incidental impurities in the balance include Sn, As, Sb, Bi, Co, Pb, Zn, and O. This, however, does not exclude that the steel contains 0.1% or less of Sn, 0.05% or less of each of As, Sb, and Co, and 0.005% or less of each of Bi, Pb, Zn, and O as long as the advantageous effects of the present invention are not impaired.

In the electric resistance welded steel pipe of the present invention, it is preferable that the steel microstructure at half the wall thickness of the base metal zone have an average grain size of 15.0 $\mu$m or less. In the electric resistance welded steel pipe of the present invention, it is preferable that the steel microstructures at a location 1 mm deep from the inner surface of the electric resistance weld, at a location 1 mm deep from the outer surface of the electric resistance weld, at a location 1 mm deep from the inner surface of the base metal zone, and at a location 1 mm deep from the outer surface of the base metal zone each have a number density of high-KAM value regions having a KAM value of 3.0 or more and 5.0 or less of 1000 regions/mm$^2$ or more, and an area ratio of high-KAM value regions having an equivalent circular diameter of 5.0 $\mu$m or more of 0.050 or less.

The average grain size and the distribution of KAM values are measured by the SEM/EBSD method. The measurement region is 400 $\mu$m $\times$ 400 $\mu$m, and the measurement step size is 0.1 $\mu$m. Values measured from at least five fields of view are averaged. The EBSD data obtained are analyzed with crystal orientation analysis software OIM Analysis (trademark) to determine the distribution of grain boundaries and the distribution of grain sizes assuming that boundaries with a misorientation of 15° or more are grain boundaries (high-angle grain boundaries). Furthermore, a KAM value distribution image (a KAM map) is obtained. The average grain size is calculated as the diameter of a circle that has an area equal to the total of the measured areas divided by the number of grains (the equivalent circular diameter). In the determination of the average grain size, grains with a grain size of 1.0 $\mu$m or less are excluded as a measurement noise.

Here, the KAM (Kernel average misorientation) values are determined in the following manner. Each measurement point (a regular hexagonal pixel) is analyzed to measure the misorientation from each of the pixels (37 pixels in total) in the three nearest sets of pixels that surround that pixel as the center, and the average of the misorientations measured is taken as the KAM value of that central pixel. This procedure is performed with respect to all the pixels in the field of view, and a KAM map is thus obtained. As the KAM value is higher, the dislocation density at that measurement point tends to be higher and therefore the hardness tends to be higher.

The number density of high-KAM value regions and the area ratio of high-KAM value regions having an equivalent circular diameter of 5.0 $\mu$m or more are determined by analyzing the obtained KAM map using image analysis software ImageJ 1.52p. First, the KAM map is binarized into regions with a KAM value of 3.0 or more and 5.0 or less (high-KAM value regions) and other regions. Subsequently, the number of high-KAM value regions in the KAM map and their areas are determined using the "Analyze Particles" function of image analysis software ImageJ 1.52p. Furthermore, the equivalent circular diameter of each high-KAM value region is determined from the area of each high-KAM value region. The number density of high-KAM value regions is obtained by dividing the number (count) of high-KAM value regions by the area of the KAM map. High-KAM value regions with an equivalent circular diameter of less than 2.0 $\mu$m are excluded as a measurement noise. The area ratio of high-KAM value regions having an equivalent circular diameter of 5.0 $\mu$m or more is calculated by dividing the area of the total of high-KAM value regions with an equivalent circular diameter of 5.0 $\mu$m or more by the area of the KAM map.

When the steel microstructure at half the wall thickness of the base metal zone has a large average grain size, the strength of the electric resistance welded steel pipe is lowered. Thus, the average grain size is preferably 15.0 $\mu$m or less. The average grain size is more preferably 10.0 $\mu$m or less. When the steel microstructure at half the wall thickness of the base metal zone has a small average grain size, the hardness near the inner surface and near the outer surface of the electric resistance welded steel pipe is increased, and the steel microstructures in the locations at the predetermined depth have an increased area ratio of high-KAM value regions having an equivalent circular diameter of 5.0 $\mu$m or more. Thus, the average grain size is preferably 2.0 $\mu$m or more. The average grain size is more preferably 3.0 $\mu$m or more.

When the number density of high-KAM value regions is small in the steel microstructures at a location 1 mm deep from the inner surface of the electric resistance weld, at a location 1 mm deep from the outer surface of the electric resistance weld, at a location 1 mm deep from the inner surface of the base metal zone, and at a location 1 mm deep from the outer surface of the base metal zone, the high-hardness regions in the microstructure in each of these locations at the predetermined depth have large areas and hence give rise to large local variations in hardness. Consequently, the 10 gf load Vickers test with respect to multiple sites in each of the locations at the predetermined depth results in an increased ratio of indentations with a hardness greater than or equal to the average hardness plus 40 HV. Furthermore, the ratio of indentations having an eccentricity E of 0.20 or more is increased. Thus, the number density of high-KAM value regions in the microstructure in each of the locations at the predetermined depth is preferably 1000 regions/mm$^2$ or more. The number density is more preferably 2000 regions/mm$^2$ or more. When the number density of high-KAM value regions is excessively high, the area ratio of the total of high-hardness regions is increased and the local variations in hardness become large. Consequently, the 10 gf load Vickers test with respect to multiple sites in each of the locations at the predetermined depth results in an increased ratio of indentations with a hardness greater than or equal to the average hardness plus 40 HV. Furthermore, the ratio of indentations having an eccentricity E of 0.20 or more is increased. Thus, the number density of high-KAM value regions in the microstructure in each of the locations at the predetermined depth is preferably 50000 regions/mm$^2$ or less. The number density is more preferably 30000 regions/mm$^2$ or less.

When the area ratio of high-KAM value regions having an equivalent circular diameter of 5.0 $\mu$m or more is high in the steel microstructures at a location 1 mm deep from the inner surface of the electric resistance weld, at a location 1 mm deep from the outer surface of the electric resistance weld, at a location 1 mm deep from the inner surface of the base metal zone, and at a location 1 mm deep from the outer surface of the base metal zone, the high-hardness regions in the microstructure in each of these locations at the predetermined depth have large areas and hence give rise to large local variations in hardness. Consequently, the 10 gf load Vickers test with respect to multiple sites in each of the locations at the predetermined depth results in an increased ratio of indentations with a hardness greater than or equal to the average hardness plus 40 HV. Furthermore, the ratio of indentations having an eccentricity E of 0.20 or more is increased. Thus, the area ratio of high-KAM value regions having an equivalent circular diameter of 5.0 $\mu$m or more in the microstructure in each of the locations at the predetermined depth is preferably 0.050 or less. The area ratio is more preferably 0.030 or less. The lower the area ratio, the more preferable. However, excessive reduction of the area ratio increases production costs and production loads. Thus, the area ratio is preferably 0.001 or more. The area ratio is more preferably 0.002 or more.

Furthermore, it is preferable that the steel microstructure at half the wall thickness of the base metal zone have a total volume fraction of ferrite and bainite of 80% or more, with the balance including one, or two or more selected from pearlite, martensite, and austenite. More preferably, the balance consists of one, or two or more selected from pearlite, martensite, and austenite.

Ferrite is a soft microstructure. Bainite is a microstructure that is harder than ferrite and softer than pearlite, martensite, and austenite.

When the volume fraction of bainite is low, soft ferrite represents a high proportion and the strength is lowered. Thus, it is preferable that the volume fraction of bainite be 10% or more. The volume fraction of bainite is more preferably 20% or more.

When the total volume fraction of ferrite and bainite is low, hard pearlite, martensite, and austenite represent a high proportion near the inner surface and the outer surface of the electric resistance welded steel pipe. As a result, the microstructure in each of the locations at the predetermined depth has an increased number density of high-KAM value regions and an increased area ratio of high-KAM value regions having an equivalent circular diameter of 5.0 $\mu$m or more. Thus, it is preferable that the total volume fraction of ferrite and bainite be 80% or more. The total volume fraction is more preferably 85% or more. On the other hand, ductility is lowered when the proportion of hard pearlite, martensite, and austenite approaches 0%. Thus, it is preferable that the total volume fraction of ferrite and bainite be 99% or less. The total volume fraction is more preferably 98% or less.

The above-described microstructures except austenite nucleate from austenite grain boundaries or deformation bands within austenite grains. Hot rolling that applies a large amount of rolling reduction at low temperatures where austenite recrystallization is difficult to occur can introduce a large amount of dislocations into austenite to reduce the size of austenite grains and can introduce a large amount of deformation bands within the grains. Consequently, the processing increases the area of nucleation sites and thus increases the nucleation frequency, making it possible to reduce the size of steel microstructures.

Here, the steel microstructures can be observed as follows. First, a test specimen for microstructure observation is sampled in such a manner that the observation surface will be a cross section that is parallel to both the axis direction and the wall thickness direction of the electric resistance welded steel pipe and is at half the wall thickness. The test specimen is then polished and is etched with Nital. The microstructures at half the wall thickness are observed and photographed with an optical microscope (magnification: 1000 times) or a scanning electron microscope (SEM, magnification: 1000 times). Next, the optical microscopic images and the SEM images obtained are analyzed to determine the area fractions of bainite and the remaining microstructures (ferrite, pearlite, martensite, austenite). The area fraction of each microstructure is calculated as the average of values obtained by observation of at least five fields of view. In the present invention, the area fractions obtained by microstructure observation are taken as the same as the volume fractions of the respective microstructures.

Ferrite is a product of diffusion transformation and appears as a microstructure in which dislocations are substantially recovered and have a low density. Ferrite includes polygonal ferrite and quasi-polygonal ferrite.

Bainite is a multiphase microstructure containing lath ferrite with a high dislocation density, and cementite.

Pearlite is a eutectoid microstructure of iron and iron carbide (ferrite + cementite), and appears as a lamellar microstructure composed of alternating layers of ferrite and cementite.

Martensite is a lath low-temperature transformation microstructure having a very high dislocation density. In SEM images, martensite appears bright contrast compared to ferrite or bainite.

In optical microscopic images and SEM images, martensite and austenite are difficult to distinguish from each other. Thus, the area fractions of microstructures identified as martensite or austenite in the SEM images obtained are combined, and the volume fraction of austenite measured by the method described below is subtracted from the combined value to give the volume fraction of martensite.

Austenite is fcc phase. The volume fraction of austenite is measured by X-ray diffractometry of a test specimen prepared in the same manner as the above test specimen. The volume fraction of austenite is determined from the integrated intensities of (200), (220), and (311) planes of fcc iron, and (200) and (211) planes of bcc iron.

In order to withstand an internal pressure and an axial load, the yield strength of the electric resistance welded steel pipe of the present invention is preferably 400 MPa or more. The yield strength is more preferably 450 MPa or more. An excessively high yield strength comes with low SSC resistance of the electric resistance welded steel pipe. Thus, the yield strength is preferably 1100 MPa or less. The yield strength is more preferably 1000 MPa or less. A test specimen used for strength measurement is a full thickness JIS No. 5 tensile test piece sampled from the base metal zone of the electric resistance welded steel pipe in such a manner that the tensile direction will be parallel to the direction of the pipe axis. The tensile test is performed in accordance with the provisions of JIS Z 2241 (2011). The flow stress at a nominal strain of 0.5% is taken as the yield strength (MPa).

It is preferable that in a four-point bending corrosion test of the electric resistance welded steel pipe of the present invention, the inner and outer surfaces of the base metal zone and the inner and outer surfaces of the electric resistance weld be each free from cracking and show a depth (the maximum depth) of pitting corrosion of less than 250 $\mu$m and a number density of pitting corrosion of 5.0 pits/mm or less. The depth of pitting corrosion is more preferably less than 200 $\mu$m. The number density of pitting corrosion is more preferably 4.0 pits/mm or less. Test specimens for the four-point bending corrosion test are corrosion test specimens 5 mm in thickness $\times$ 15 mm in width $\times$ 115 mm in length that are sampled from the base metal zone and the electric resistance weld of the electric resistance welded steel pipe in such a manner that the width direction of the corrosion test specimen will be parallel to the circumferential direction of the electric resistance welded steel pipe and that the longitudinal direction of the corrosion test specimen will be parallel to the axis direction of the electric resistance welded steel pipe. Sampling ensures that the surface that will be bent outward, that is, the to-be-corroded surface will have the original state of the surface of the electric resistance welded steel pipe. In accordance with the EFC16 standard, the four-point bending corrosion test is performed using NACE standard TM0177 Solution A at a hydrogen sulfide partial pressure of 1 bar while a tensile stress equivalent to 90% of the yield strength of the electric resistance welded steel pipe determined in the above tensile test is applied to the to-be-corroded surface of the sampled test specimen. After being immersed in the above solution for 720 hours, the test specimen is checked for the occurrence of cracking. Furthermore, the test specimen after being tested is cut at 1/3 width and 2/3 width to give observation specimens in such a manner that the observation surface will be a cross section parallel to the thickness direction and the longitudinal direction. The observation specimens obtained are mirror-polished and are observed with an optical microscope. The depth and the number of all the pits that have occurred on the tensile-stressed portion are measured, and the maximum depth and the number density of pitting corrosion are calculated.

The wall thickness of the electric resistance welded steel pipe of the present invention is, for example, 5 mm or more. The wall thickness of the electric resistance welded steel pipe of the present invention is, for example, 40 mm or less.

Next, a method for manufacturing the electric resistance welded steel pipe according to an embodiment of the present invention will be described.

For example, the electric resistance welded steel pipe of the present invention is manufactured as follows. A steel material having the chemical composition described hereinabove is subjected to the following heating step, hot rolling step, and cooling step and is subsequently coiled into a coil of the hot-rolled steel sheet. The hot-rolled steel sheet is cold roll-formed into a cylindrical shape, which is then electric resistance welded and heat-treated as described later to give an electric resistance welded steel pipe.

In the following description of the manufacturing method, the temperature "°C" indicates the surface temperature of a steel material or a steel sheet (a hot-rolled sheet) and the outer surface temperature of a steel pipe unless otherwise specified. These surface temperatures may be measured with, for example, a radiation thermometer. The temperature of the inside of a steel sheet or the inner surface of a steel pipe may be determined by calculating the temperature distribution in a cross section of the steel sheet or a cross section of the steel pipe by heat transfer analysis and correcting the results with the surface temperature of the steel sheet or the outer surface temperature of the steel pipe. The term "hot-rolled steel sheet" includes hot-rolled sheet and hot-rolled steel strip.

In the present invention, the steel material (a steel slab) may be smelted by any method without limitation. Any known smelting methods, such as a converter, an electric arc furnace, or a vacuum melting furnace, may be adopted. The casting method is not particularly limited, and the steel slab may be produced with desired dimensions by a known casting method, such as a continuous casting method. In place of the continuous casting method, an ingot making-blooming method may be applied without any problems. The molten steel may be further subjected to secondary refining, such as ladle refining.

Next, the steel material (the steel slab) obtained is subjected to a heating step, a hot rolling step, and a cooling step, and is subsequently coiled into a coil of the hot-rolled steel sheet.

In the heating step, the steel material is heated to a heating temperature of, for example, 1100°C or above and 1300°C or below.

If the heating temperature is low, the rolling workpiece exhibits high deformation resistance and is difficult to be rolled. If, on the other hand, the heating temperature is high, austenite grains are coarsened and fine austenite grains cannot be obtained in the subsequent rolling (rough rolling, finish rolling), resulting in a large average grain size. Thus, the heating temperature is preferably 1100°C or above and 1300°C or below. The heating temperature is more preferably 1120°C or above. The heating temperature is more preferably 1280°C or below.

In the present invention, the steel slab (the slab) that has been manufactured may be treated in the conventional manner, that is, may be cooled to room temperature and subsequently reheated. Alternatively, an energy-saving hot direct rolling process may be applied without any problem in which the hot slab is introduced into the heating furnace without being cooled to room temperature or is rolled immediately after short heat retention.

In the hot rolling step, for example, the steel slab is hot-rolled in such a manner that a rolling reduction of 10% or more and 50% or less is applied 5 or more times at intervals of 50 s or less in the range of temperatures at (1/4)t location (t: thickness) of 1000°C to 1100°C, the total rolling reduction in the finish rolling is 50% or more, and the finish rolling delivery temperature is 750°C or above and 850°C or below. The reduction at temperatures in the range of 1000°C to 1100°C may be applied in rough rolling, finish rolling, or both rough rolling and finish rolling.

If the rolling reduction in each rolling at 1000°C or above and 1100°C or below is low, austenite is coarsened and the average grain size is increased. Furthermore, the recrystallization of austenite is insufficient and leaves coarse austenite with high hardenability, with the result that the number density of high-KAM value regions is lowered and the area ratio of high-KAM value regions having an equivalent circular diameter of 5.0 $\mu$m or more is increased. If, on the other hand, the rolling reduction is high, the rolling is difficult because it encounters high deformation resistance of the rolling workpiece. Thus, the rolling reduction is preferably 10% or more and 50% or less. The rolling reduction is more preferably 15% or more. The rolling reduction is more preferably 45% or less.

If the rolling interval (time interval) at 1000°C or above and 1100°C or below is long, austenite is coarsened and the average grain size is increased. Furthermore, the recrystallization of austenite is insufficient and leaves coarse austenite with high hardenability, with the result that the number density of high-KAM value regions is lowered and the area ratio of high-KAM value regions having an equivalent circular diameter of 5.0 $\mu$m or more is increased. Thus, the interval is preferably 50 s or less. The interval is more preferably 45 s or less. The shorter the interval, the more preferable. However, excessively short intervals lead to high production costs and high production loads. Thus, the interval is preferably 5 s or more. Here, the rolling interval is the time interval between when a portion of the rolling workpiece is rolled and when the next rolling is performed on that portion (the time interval between rolling passes). Cooling may be performed between rolling passes. In this case, cooling may be natural cooling, or may be water cooling as required.

If the number of rolling passes at 1000°C or above and 1100°C or below is small, austenite is coarsened and the average grain size is increased. Furthermore, the recrystallization of austenite is insufficient and leaves coarse austenite with high hardenability, with the result that the number density of high-KAM value regions is lowered and the area ratio of high-KAM value regions having an equivalent circular diameter of 5.0 $\mu$m or more is increased. Thus, the number of rolling passes is preferably 5 or more. The number of rolling passes is more preferably 7 or more. If the number of rolling passes is excessively large, the rolling reduction in each pass is lowered. Thus, the number of rolling passes is preferably 15 or less.

If the total rolling reduction in the finish rolling is low, austenite is coarsened and the average grain size is increased. Thus, the total rolling reduction is preferably 50% or more. The total rolling reduction is more preferably 55% or more. If the total rolling reduction is high, the average grain size is lowered. Thus, the total rolling reduction is preferably 80% or less. The total rolling reduction is more preferably 75% or less.

The total rolling reduction in the finish rolling is the total of the rolling reductions of the rolling passes in the finish rolling.

The finish thickness is preferably 5 mm or more from the points of view of ensuring the required rolling reduction and controlling the steel sheet temperature. From the above points of view, the finish thickness is preferably 40 mm or less. The finish thickness is preferably 5 mm or more and 40 mm or less.

If the finish rolling delivery temperature is low, the temperature falls to or below the ferrite transformation start temperature during the finish rolling and a large amount of deformed ferrite is formed to cause a decrease in ductility. If, on the other hand, the finish rolling delivery temperature is high, fine austenite grains cannot be obtained and the average grain size is increased. Thus, the finish rolling delivery temperature is preferably 750°C or above and 850°C or below. The finish rolling delivery temperature is more preferably 770°C or above. The finish rolling delivery temperature is more preferably 830°C or below.

In the cooling step, for example, the steel sheet is cooled at an average cooling rate at half the thickness of 5°C/s or more and 40°C/s or less to a cooling stop temperature of 400°C or above and 650°C or below.

If the average cooling rate is low, the microstructures are coarsened and the average grain size is increased. Furthermore, the bainite fraction is lowered. If the average cooling rate is high, the martensite fraction in the superficial layer is increased to cause an increase in the number density of high-KAM value regions and an increase in the area ratio of high-KAM value regions having an equivalent circular diameter of 5.0 $\mu$m or more. Thus, the average cooling rate is preferably 5°C/s or more and 40°C/s or less. The average cooling rate is more preferably 10°C/s or more. The average cooling rate is more preferably 35°C/s or less. Unless otherwise specified, the average cooling rate is determined from [(cooling start temperature - cooling stop temperature)/cooling time from cooling start temperature to cooling stop temperature].

If the cooling stop temperature is low, the martensite fraction in the superficial layer is increased to cause an increase in the number density of high-KAM value regions and an increase in the area ratio of high-KAM value regions having an equivalent circular diameter of 5.0 $\mu$m or more. If the cooling stop temperature is high, the microstructures are coarsened and the average grain size is increased. Furthermore, the bainite fraction is lowered. Thus, the cooling stop temperature is preferably 400°C or above and 650°C or below. The cooling stop temperature is more preferably 450°C or above. The cooling stop temperature is more preferably 600°C or below.

Next, the hot-rolled steel sheet is cold roll-formed into a cylindrical shape, which is then electric resistance welded and heat-treated.

In the heat treatment step, for example, induction heating is applied from the outer surface of the electric resistance weld so that the total heating time for which the temperature of the outer surface of the electric resistance weld is 900°C or above will be 100 s or less, and the heating rate on the inner surface of the electric resistance weld will be 3°C/s or more. The manner of heating is not limited to the above. The entire pipe may be heated in a heating furnace or the entire pipe may be heated by induction heating. In this case, heating is controlled so that the temperature history of the entire pipe will be uniform. The above heating rate is the average heating rate in the temperature range of 400 to 800°C. Next, the outer surface of the electric resistance weld is water-cooled so that, for example, the average cooling rate on the inner surface of the electric resistance weld will be 10°C/s or more and 50°C/s or less. The manner of cooling is not limited to the above. Cooling may be applied to the inner surface, the entire pipe may be cooled in a water tank, or the entire pipe may be cooled by spraying on the inner and outer surfaces. In these cases, cooling is controlled so that the temperature history of the entire pipe will be uniform. The average cooling rate is the average cooling rate in the temperature range of 400 to 700°C. Subsequently, tempering may be performed to control the hardness as required.

If the total heating time for which the temperature of the outer surface of the electric resistance weld is 900°C or above is long, the microstructures are coarsened and the average grain size is increased. Furthermore, the fraction of coarse martensite in the outer surface is increased and martensite grains are connected to one another, with the result that the number density of high-KAM value regions is lowered and the area ratio of high-KAM value regions having an equivalent circular diameter of 5.0 $\mu$m or more is increased. Thus, the total heating time is preferably 100 s or less. The total heating time is more preferably 90 s or less. If the total heating time is short, there is a risk that the microstructures will not be completely austenitized during the heating. Thus, the total heating time is preferably 10 s or more.

If the heating rate on the inner surface of the electric resistance weld is low, the microstructures are coarsened and the average grain size is increased. Furthermore, the outer surface will be low in the number density of high-KAM value regions and will be high in the area ratio of high-KAM value regions having an equivalent circular diameter of 5.0 $\mu$m or more. Thus, the heating rate is preferably 3°C/s or more. The heating rate is more preferably 5°C/s or more. If the heating rate is high, there is a risk that the microstructures will not be completely austenitized during the heating. Thus, the heating rate is preferably 50°C/s or less.

If the average cooling rate on the inner surface of the electric resistance weld is low, the microstructures are coarsened and the average grain size is increased. Furthermore, the bainite fraction is lowered. Thus, the average cooling rate is preferably 10°C/s or more. The average cooling rate is more preferably 15°C/s or more. If the average cooling rate is high, the martensite fraction in the inner surface is increased to cause an increase in the number density of high-KAM value regions and an increase in the area ratio of high-KAM value regions having an equivalent circular diameter of 5.0 $\mu$m or more. Thus, the average cooling rate is preferably 50°C/s or less. The average cooling rate is more preferably 40°C/s or less.

Whether a steel pipe is an electric resistance welded steel pipe can be determined by cutting the electric resistance welded steel pipe in a direction perpendicular to the pipe axis, polishing and etching the cut surface including the weld (the electric resistance weld), and observing the weld with an optical microscope. The steel pipe is an electric resistance welded steel pipe if the solidified melt zone of the weld (the electric resistance weld) has a width in the circumferential direction of the pipe of 1.0 $\mu$m or more and 1000 $\mu$m or less over the entire thickness of the pipe.

The etching solution used here may be selected appropriately in accordance with the steel components and the type of steel pipe. In the cross section after etching, as schematically illustrated in Fig. 4, the solidified melt zone can be recognized as a region 3 differing in microstructures and contrast from a base metal zone 1 and a weld heat-affected zone 2 in Fig. 4. For example, a solidified melt zone of an electric resistance welded steel pipe made of carbon steel or low-alloy steel can be identified as a region that appears white in a Nital-etched cross section under an optical microscope. A solidified melt zone of a UOE steel pipe made of carbon steel or low-alloy steel can be identified as a region containing cellular or dendritic solidified microstructures in a Nital-etched cross section under an optical microscope.

The electric resistance welded steel pipes of the present invention have excellent SSC resistance and may be suitably used particularly as materials for line pipes.

EXAMPLES

Hereinbelow, the present invention will be described in greater detail based on Examples. The present invention is not limited to the following Examples.

Molten steels having a chemical composition described in Table 1 were smelted and cast into slabs (steel materials). The slabs obtained were subjected to a heating step, a hot rolling step, and a cooling step under conditions described in Table 2 to give hot-rolled steel sheets with a finish thickness (mm) described in Table 2. Subsequently, the hot-rolled steel sheets were roll-formed into cylindrical round steel pipes. The butt joints were electric resistance welded. Subsequently, the electric resistance welds were heat-treated under conditions described in Table 3 and the pipes were reduced in diameter using rolls arranged above, below, left, and right of the round steel pipe. Thus, electric resistance welded steel pipes having an outer diameter (mm) and a wall thickness (mm) described in Table 3 were obtained.

[Table 1]

| Nos. | Chemical composition (mass%) | | | | | | | | | | | | | | | | | | |
|---|---|---|---|---|---|---|---|---|---|---|---|---|---|---|---|---|---|---|---|
| | C | Si | Mn | P | S | Al | N | Nb | V | Ti | Cu | Ni | Cr | Mo | Ca | B | Mg | Zr | REM |
| 1 | 0.146 | 0.37 | 1.95 | 0.007 | 0.0005 | 0.023 | 0.0045 | - | - | - | - | - | - | - | - | - | - | - | - |
| 2 | 0.024 | 0.14 | 1.23 | 0.006 | 0.0006 | 0.038 | 0.0033 | 0.032 | - | 0.041 | - | - | 0.23 | 0.19 | 0.0019 | - | 0.011 | - | 0.016 |
| 3 | 0.024 | 0.14 | 1.23 | 0.006 | 0.0006 | 0.038 | 0.0033 | 0.032 | - | 0.041 | - | - | 0.23 | 0.19 | 0.0019 | - | 0.011 | - | 0.016 |
| 4 | 0.024 | 0.14 | 1.23 | 0.006 | 0.0006 | 0.038 | 0.0033 | 0.032 | - | 0.041 | - | - | 0.23 | 0.19 | 0.0019 | - | 0.011 | - | 0.016 |
| 5 | 0.183 | 0.04 | 0.34 | 0.022 | 0.0028 | 0.032 | 0.0030 | 0.040 | 0.054 | 0.015 | 0.18 | 0.15 | - | - | 0.0025 | 0.0012 | - | 0.008 | - |
| 6 | 0.183 | 0.04 | 0.34 | 0.022 | 0.0028 | 0.032 | 0.0030 | 0.040 | 0.054 | 0.015 | 0.18 | 0.15 | - | - | 0.0025 | 0.0012 | - | 0.008 | - |
| 7 | 0.072 | 0.09 | 0.93 | 0.030 | 0.0007 | 0.025 | 0.0034 | 0.024 | 0.015 | 0.029 | 0.11 | 0.12 | - | - | 0.0013 | - | - | - | - |
| 8 | 0.072 | 0.09 | 0.93 | 0.030 | 0.0007 | 0.025 | 0.0034 | 0.024 | 0.015 | 0.029 | 0.11 | 0.12 | - | - | 0.0013 | - | - | - | - |
| 9 | 0.055 | 0.18 | 1.28 | 0.008 | 0.0017 | 0.044 | 0.0026 | 0.011 | 0.039 | 0.021 | - | - | 0.15 | 0.09 | 0.0024 | - | - | 0.015 | - |
| 10 | 0.055 | 0.18 | 1.28 | 0.008 | 0.0017 | 0.044 | 0.0026 | 0.011 | 0.039 | 0.021 | - | - | 0.15 | 0.09 | 0.0024 | - | - | 0.015 | - |

·The balance in the chemical composition is Fe and incidental impurities.

[Table 2]

| Nos. | Heating step | Hot rolling step | | | | | | Cooling step | | Finish thickness (mm) |
|---|---|---|---|---|---|---|---|---|---|---|
| | Heating temp. (°C) | Maximum value of the rolling reduction at 1000°C to 1100°C (%) | Minimum value of the rolling reduction at 1000°C to 1100°C (%) | Maximum value of the time interval between rolling passes at 1000°C to 1100°C (s) | Number of rolling passes at 1000°C to 1100°C | Total rolling reduction in finish rolling (%) | Finish rolling delivery temp. (°C) | Average cooling rate (°C/s) | Cooling stop temp. (°C) | |
| 1 | 1200 | 29 | 15 | 36 | 7 | 61 | 770 | 12 | 475 | 22 |
| 2 | 1190 | 36 | 21 | 40 | 9 | 57 | 780 | 22 | 540 | 16 |
| 3 | 1170 | 46 | 8 | 44 | 6 | 69 | 800 | 38 | 440 | 16 |
| 4 | 1190 | 35 | 12 | 52 | 7 | 53 | 810 | 46 | 550 | 19 |
| 5 | 1240 | 36 | 20 | 46 | 7 | 61 | 810 | 39 | 565 | 22 |
| 6 | 1220 | 32 | 17 | 35 | 4 | 61 | 820 | 46 | 490 | 22 |
| 7 | 1280 | 28 | 13 | 32 | 7 | 69 | 830 | 11 | 440 | 25 |
| 8 | 1240 | 33 | 21 | 21 | 8 | 72 | 780 | 14 | 550 | 25 |
| 9 | 1150 | 49 | 24 | 29 | 7 | 77 | 830 | 39 | 525 | 9 |
| 10 | 1160 | 27 | 14 | 32 | 8 | 47 | 810 | 8 | 570 | 9 |

[Table 3]

| Nos. | Heat treatment step | | | Dimensions of electric resistance welded steel pipe | |
|---|---|---|---|---|---|
| | Total heating time for which the temperature of the outer surface is 900°C or above (s) | Heating rate on the inner surface (°C/s) | Average cooling rate on the inner surface (°C/s) | Outer diameter (mm) | Wall thickness (mm) |
| 1 | 95 | 38 | 33 | 610 | 22 |
| 2 | 84 | 17 | 41 | 610 | 16 |
| 3 | 25 | 21 | 31 | 610 | 16 |
| 4 | 24 | 30 | 20 | 610 | 19 |
| 5 | 55 | 18 | 42 | 500 | 22 |
| 6 | 39 | 44 | 35 | 500 | 22 |
| 7 | 36 | 19 | 42 | 600 | 25 |
| 8 | 25 | 28 | 53 | 600 | 25 |
| 9 | 25 | 34 | 44 | 350 | 9 |
| 10 | 19 | 17 | 40 | 350 | 9 |

Test specimens were sampled from the electric resistance welded steel pipes obtained and were subjected to the following measurement of the average grain size, measurement of the number density of high-KAM value regions, measurement of the area ratio of high-KAM value regions having an equivalent circular diameter of 5.0 $\mu$m or more, observation of microstructures, tensile test, Vickers test, and four-point bending corrosion test. The "base metal zone" below indicates a base metal zone 90° away from the electric resistance weld in the circumferential direction of the pipe.

[Measurement of average grain size]

The average grain size was measured by the SEM/EBSD method. The measurement region was 400 $\mu$m × 400 $\mu$m, and the measurement step size was 0.1 $\mu$m. The grain size was measured with respect to a through-thickness central portion of the base metal zone, and the values measured from five fields of view were averaged. The EBSD data obtained were analyzed with crystal orientation analysis software OIM Analysis (trademark) to determine the distribution of grain boundaries and the distribution of grain sizes assuming that boundaries with a misorientation of 15° or more were grain boundaries (high-angle grain boundaries). The average grain size was calculated as the diameter of a circle having an area equal to the total of the measured areas divided by the number of grains (the equivalent circular diameter). In the determination of the average grain size, grains with a grain size of 1.0 $\mu$m or less were excluded as a measurement noise.

[Measurement of the number density of high-KAM value regions]

The number density of high-KAM value regions was measured by the SEM/EBSD method. The measurement region was 400 $\mu$m × 400 $\mu$m, and the measurement step size was 0.1 $\mu$m. The EBSD data obtained were analyzed with crystal orientation analysis software OIM Analysis (trademark) to give a KAM value distribution image (a KAM map). Here, the KAM (Kernel average misorientation) values were determined in the following manner. Each measurement point (a regular hexagonal pixel) was analyzed to measure the misorientation from each of the pixels (37 pixels in total) in the three nearest sets of pixels that surrounded that pixel as the center, and the average of the misorientations measured was taken as the KAM value of that central pixel. This procedure was performed with respect to all the pixels in the field of view (the measurement region), and a KAM map was thus obtained. The number density of high-KAM value regions was determined by analyzing the obtained KAM map using image analysis software ImageJ 1.52p. First, the KAM map was binarized into regions with a KAM value of 3.0 or more and 5.0 or less (high-KAM value regions) and other regions. Subsequently, the number of high-KAM value regions in the KAM map was determined using the "Analyze Particles" function of image analysis software ImageJ 1.52p. The number density of high-KAM value regions was obtained by dividing the number (count) of high-KAM value regions by the area of the KAM map. High-KAM value regions with an equivalent circular diameter of less than 2.0 $\mu$m were excluded as a measurement noise. Five fields of view of the above measurement regions were analyzed with respect to each of a location 1 mm deep from the inner surface of the electric resistance weld, a location 1 mm deep from the outer surface of the electric resistance weld, a location 1 mm deep from the inner surface of the base metal zone, and a location 1 mm deep from the outer surface of the base metal zone. The respective results were averaged. The averages thus obtained were taken as the number densities of high-KAM value regions in the microstructures in the respective locations at the predetermined depth. Subsequently, the maximum value and the minimum value were determined from among the number densities of high-KAM value regions at the location 1 mm deep from the inner surface of the electric resistance weld, the location 1 mm deep from the outer surface of the electric resistance weld, the location 1 mm deep from the inner surface of the base metal zone, and the location 1 mm deep from the outer surface of the base metal zone.

[Measurement of the area ratio of high-KAM value regions having an equivalent circular diameter of 5.0 $\mu$m or more]

The area ratio of high-KAM value regions having an equivalent circular diameter of 5.0 $\mu$m or more was determined by analyzing the KAM map obtained in the measurement of the number density of high-KAM value region, using image analysis software ImageJ 1.52p. First, the KAM map was binarized into regions with a KAM value of 3.0 or more and 5.0 or less (high-KAM value regions) and other regions. Subsequently, the areas of high-KAM value regions in the KAM map were determined using the "Analyze Particles" function of image analysis software ImageJ 1.52p. Furthermore, the equivalent circular diameter of each high-KAM value region was determined from the area of each high-KAM value region. The area ratio of high-KAM value regions having an equivalent circular diameter of 5.0 $\mu$m or more was calculated by dividing the area of the total of high-KAM value regions with an equivalent circular diameter of 5.0 $\mu$m or more by the area of the KAM map. Five fields of view of the above measurement regions were analyzed with respect to each of a location 1 mm deep from the inner surface of the electric resistance weld, a location 1 mm deep from the outer surface of the electric resistance weld, a location 1 mm deep from the inner surface of the base metal zone, and a location 1 mm deep from the outer surface of the base metal zone. The respective results were averaged. The averages thus obtained were taken as the area ratios of high-KAM value regions having an equivalent circular diameter of 5.0 $\mu$m or more in the microstructures in the respective locations at the predetermined depth. Subsequently, the maximum value and the minimum value were determined from among the area ratios of high-KAM value regions having an equivalent circular diameter of 5.0 $\mu$m or more at the location 1 mm deep from the inner surface of the electric resistance weld, the location 1 mm deep from the outer surface of the electric resistance weld, the location 1 mm deep from the inner surface of the base metal zone, and the location 1 mm deep from the outer surface of the base metal zone.

[Microstructure observation]

A test specimen for microstructure observation was sampled from the base metal zone in such a manner that the observation surface would be a cross section that was parallel to both the axis direction and the wall thickness direction of the electric resistance welded steel pipe and was at half the wall thickness. The test specimen was then polished and was etched with Nital. The microstructures at half the wall thickness were observed and photographed with an optical microscope (magnification: 1000 times) or a scanning electron microscope (SEM, magnification: 1000 times). Next, the optical microscopic images and the SEM images obtained were analyzed to determine the area fractions of bainite and the remaining microstructures (ferrite, pearlite, martensite, austenite). The area fraction of each microstructure was calculated as the average of values obtained by observation of five fields of view. In the present invention, the area fractions obtained by microstructure observation were taken as the same as the volume fractions of the respective microstructures.

[Tensile test]

A full thickness JIS No. 5 tensile test piece was sampled from the base metal zone of the electric resistance welded steel pipe in such a manner that the tensile direction would be parallel to the direction of the pipe axis. The tensile test was performed in accordance with the provisions of JIS Z 2241 (2011). The flow stress at a nominal strain of 0.5% was taken as the yield strength (MPa).

[Vickers test]

For both the electric resistance weld and the base metal zone, the Vickers test was performed at a load of 10 gf with respect to a cross section perpendicular to the direction of the pipe axis as the measurement surface in accordance with the method described in JIS Z 2244 (2020). As illustrated in Fig. 2, the electric resistance weld was tested at a location 1 mm deep from the inner surface and at a location 1 mm deep from the outer surface by being depressed each at 201 points that were continuous with 0.2 mm intervals in the circumferential direction in a range extending 20 mm from the electric resistance weld to the left side and to the right side. As illustrated in Fig. 3, the base metal zone was tested at a location 1 mm deep from the inner surface and at a location 1 mm deep from the outer surface by being depressed each at 201 points that were continuous with 0.2 mm intervals in the circumferential direction in a range extending 40 mm from a position 90 degrees away from the electric resistance weld in the circumferential direction. For each indentation, the Vickers hardness was calculated and the lengths of the line segments OA, OB, OC, and OD illustrated in Fig. 1 were measured, thereby determining $L_{max}$, $L_{min}$, and $L_{ave}$. Subsequently, the ratio of the number of indentations with a hardness greater than or equal to the average hardness plus 40 HV, and the ratio of the number of indentations having an eccentricity E of 0.20 or more, both relative to the total number of indentations (201), were determined for each of the indentations at the location 1 mm deep from the inner surface of the electric resistance weld, the indentations at the location 1 mm deep from the outer surface of the electric resistance weld, the indentations at the location 1 mm deep from the inner surface of the base metal zone, and the indentations at the location 1 mm deep from the outer surface of the base metal zone. The average hardness is the average (the arithmetic average) of the Vickers hardness values calculated from the indentations in each location at the predetermined depth. Subsequently, the maximum value and the minimum value were determined from among the ratios of the number of indentations with a hardness greater than or equal to the average hardness plus 40 HV at the location 1 mm deep from the inner surface of the electric resistance weld, the location 1 mm deep from the outer surface of the electric resistance weld, the location 1 mm deep from the inner surface of the base metal zone, and the location 1 mm deep from the outer surface of the base metal zone.

[Four-point bending corrosion test]

Four-point bending corrosion test specimens 5 mm in thickness × 15 mm in width × 115 mm in length were sampled from the inner and outer surfaces of the base metal zone and the inner and outer surfaces of the electric resistance weld of the electric resistance welded steel pipe in such a manner that the width direction of the corrosion test specimen would be parallel to the circumferential direction of the electric resistance welded steel pipe and that the longitudinal direction of the corrosion test specimen would be parallel to the axis direction of the electric resistance welded steel pipe. Sampling ensured that the surface that would be bent outward, namely, the to-be-corroded surface would have the original state of the surface of the electric resistance welded steel pipe. In accordance with the EFC16 standard, the four-point bending corrosion test was performed using NACE standard TM0177 Solution A at a hydrogen sulfide partial pressure of 1 bar while a tensile stress equivalent to 90% of the yield strength of the electric resistance welded steel pipe determined in the above tensile test was applied to the to-be-corroded surface of the sampled test specimen. After being immersed in the above solution for 720 hours, the test specimen was checked for the occurrence of cracking. Furthermore, the test specimen after being tested was cut at 1/3 width and 2/3 width to give observation specimens in such a manner that the observation surface would be a cross section parallel to the thickness direction and the longitudinal direction. The observation specimens obtained were mirror-polished and were observed with an optical microscope. The depth and the number of all the pits that had occurred on the tensile-stressed portion were measured, and the maximum depth and the number density of pitting corrosion were calculated.

The results obtained are described in Tables 4 and 5.

[Table 4]

| Nos. | Average grain size $(\mu m)$ | Steel microstructures | | | | | | | |
|---|---|---|---|---|---|---|---|---|---|
| | | Maximum value of the number density of high-KAM value regions (regions/mm²) | Minimum value of the number density of high-KAM value regions (regions/mm²) | Maximum value of the area ratio of high-KAM value regions having an equivalent circular diameter of 5.0 $\mu m$ or more | Minimum value of the area ratio of high-KAM value regions having an equivalent circular diameter of 5.0 $\mu m$ or more | F fraction (vol%) | B fraction (vol%) | F+B fraction (vol%) | Remaining microstructures |
| 1 | 4.8 | 16442 | 8777 | 0.021 | 0.004 | 25 | 73 | 98 | P |
| 2 | 5.1 | 22387 | 5513 | 0.008 | 0.002 | 42 | 54 | 96 | M,A |
| 3 | 6.9 | 43988 | 14909 | 0.054 | 0.015 | 28 | 66 | 94 | M,A |
| 4 | 11.5 | 11831 | 9502 | 0.051 | 0.014 | 7 | 89 | 96 | M |
| 5 | 6.0 | 6978 | 3668 | 0.009 | 0.003 | 14 | 67 | 81 | P,M |
| 6 | 4.6 | 5287 | 834 | 0.018 | 0.011 | 9 | 73 | 82 | P,M |
| 7 | 12.3 | 9321 | 8391 | 0.023 | 0.016 | 16 | 78 | 94 | P,M |
| 8 | 5.5 | 52349 | 26789 | 0.015 | 0.005 | 60 | 17 | 77 | P,M |
| 9 | 4.2 | 21505 | 15084 | 0.037 | 0.012 | 57 | 42 | 99 | M |
| 10 | 15.3 | 27150 | 13668 | 0.013 | 0.008 | 35 | 61 | 96 | M |

·F fraction is the volume fraction of ferrite, B fraction is the volume fraction of bainite, and F+B fraction is the total volume fraction of ferrite and bainite.
·In the remaining microstructures, P indicates pearlite, M martensite, and A austenite.

EP 4 613 898 A1

[Table 5]

| Nos. | Mechanical properties | | | | | SSC resistance | | | Remarks |
|---|---|---|---|---|---|---|---|---|---|
| | Yield strength (MPa) | Maximum value of the ratio of indentations with a hardness greater than or equal to the average hardness plus 40 HV | Minimum value of the ratio of indentations with a hardness greater than or equal to the average hardness plus 40 HV | Maximum value of the ratio of indentations having an eccentricity E of 0.20 or more | Minimum value of the ratio of indentations having an eccentricity E of 0.20 or more | Cracking | Maximum value of the depth of pitting corrosion (μm) | Maximum value of the number density of pitting corrosion (pits/mm) | |
| 1 | 478 | 0.15 | 0.05 | 0.34 | 0.07 | Absent | 78 | 3.1 | Inv. Ex. |
| 2 | 557 | 0.27 | 0.16 | 0.22 | 0.07 | Absent | 160 | 2.5 | Inv. Ex. |
| 3 | 529 | 0.34 | 0.18 | 0.24 | 0.15 | Present | 255 | 5.6 | Comp. Ex. |
| 4 | 597 | 0.13 | 0.04 | 0.44 | 0.20 | Present | 241 | 6.9 | Comp. Ex. |
| 5 | 665 | 0.23 | 0.06 | 0.27 | 0.17 | Absent | 187 | 3.7 | Inv. Ex. |
| 6 | 581 | 0.27 | 0.07 | 0.45 | 0.05 | Present | 314 | 4.4 | Comp. Ex. |
| 7 | 579 | 0.12 | 0.06 | 0.18 | 0.08 | Absent | 96 | 2.9 | Inv. Ex. |
| 8 | 543 | 0.35 | 0.08 | 0.47 | 0.09 | Present | 269 | 5.3 | Comp. Ex. |
| 9 | 496 | 0.25 | 0.15 | 0.16 | 0.12 | Absent | 57 | 3.0 | Inv. Ex. |
| 10 | 393 | 0.27 | 0.05 | 0.24 | 0.09 | Absent | 132 | 2.6 | Inv. Ex. |

In Tables 4 and 5, the electric resistance welded steel pipes Nos. 1, 2, 5, 7, 9, and 10 represent Inventive Examples, and the electric resistance welded steel pipes Nos. 3, 4, 6, and 8 represent Comparative Examples.

The electric resistance welded steel pipes of Inventive Examples had a 0.30 or less ratio of indentations with a hardness greater than or equal to the average hardness plus 40 HV and a 0.40 or less ratio of indentations having an eccentricity E of 0.20 or more (in Table 5, "Maximum value of the ratio of indentations with a hardness greater than or equal to the average hardness plus 40 HV" was 0.30 or less, and "Maximum value of the ratio of indentations having an eccentricity E of 0.20 or more" was 0.40 or less) at the location 1 mm deep from the inner surface of the electric resistance weld, at the location 1 mm deep from the outer surface of the electric resistance weld, at the location 1 mm deep from the inner surface of the base metal zone, and at the location 1 mm deep from the outer surface of the base metal zone.

In the electric resistance welded steel pipe No. 3 representing Comparative Example, the minimum value of the rolling reduction at 1000°C to 1100°C in the hot rolling step was low. Consequently, the area ratio of high-KAM value regions having an equivalent circular diameter of 5.0 $\mu$m or more was high, and the ratio of indentations with a hardness greater than or equal to the average hardness plus 40 HV exceeded the range of the present invention. As a result, the desired SSC resistance was not obtained. In the electric resistance welded steel pipe No. 4 representing Comparative Example, the maximum value of the rolling interval (the time interval between rolling passes) at 1000°C to 1100°C in the hot rolling step was high. Consequently, the area ratio of high-KAM value regions having an equivalent circular diameter of 5.0 $\mu$m or more was high, and the ratio of indentations having an eccentricity E of 0.20 or more exceeded the range of the present invention. As a result, the desired SSC resistance was not obtained. In the electric resistance welded steel pipe No. 6 representing Comparative Example, the number of rolling passes at 1000°C to 1100°C in the hot rolling step was small. Consequently, the number density of high-KAM value regions was low, and the ratio of indentations having an eccentricity E of 0.20 or more exceeded the range of the present invention. As a result, the desired SSC resistance was not obtained. In the electric resistance welded steel pipe No. 8 representing Comparative Example, the average cooling rate on the inner surface during the heat treatment step was high. Consequently, the number density of high-KAM value regions was high, the total volume fraction of ferrite and bainite was low, the ratio of indentations with a hardness greater than or equal to the average hardness plus 40 HV exceeded the range of the present invention, and the ratio of indentations having an eccentricity E of 0.20 or more exceeded the range of the present invention. As a result, the desired SSC resistance was not obtained.

Reference Signs List

1 BASE METAL ZONE
2 WELD HEAT-AFFECTED ZONE
3 SOLIDIFIED MELT ZONE

**Claims**

1. An electric resistance welded steel pipe comprising a base metal zone and an electric resistance weld, wherein when the electric resistance welded steel pipe is tested by a Vickers test with a load of 10 gf with respect to a location 1 mm deep from an inner surface of the electric resistance weld, a location 1 mm deep from an outer surface of the electric resistance weld, a location 1 mm deep from an inner surface of the base metal zone, and a location 1 mm deep from an outer surface of the base metal zone, indentations in each of the locations have:

   a ratio of the number of indentations with a hardness greater than or equal to an average hardness plus 40 HV of 0.30 or less, and
   a ratio of the number of indentations having an eccentricity E of 0.20 or more of 0.40 or less, wherein
   the eccentricity E is a value calculated from expression (1) below where $L_{max}$, $L_{min}$, and $L_{ave}$ are the maximum value, the minimum value, and the average, respectively, of the lengths of line segments OA, OB, OC, and OD where O is the intersection point of the diagonals of the indentation, and
   A, B, C, and D are the vertices of the indentation in counterclockwise order,

$$E = (L_{max} - L_{min})/L_{ave} \quad \cdots (1).$$

2. The electric resistance welded steel pipe according to claim 1, wherein the base metal zone has a chemical composition comprising, in mass%:

C: 0.020% or more and 0.200% or less,
Si: 0.50% or less,
Mn: 0.30% or more and 2.00% or less,
P: 0.050% or less,
S: 0.0200% or less,
Al: 0.005% or more and 0.100% or less, and
N: 0.0100% or less,
and further optionally comprising one, or two or more selected from:

Nb: 0.080% or less,
V: 0.080% or less,
Ti: 0.080% or less,
Cu: 0.50% or less,
Ni: 0.50% or less,
Cr: 0.50% or less,
Mo: 0.50% or less,
Ca: 0.0050% or less,
B: 0.0050% or less,
Mg: 0.020% or less,
Zr: 0.020% or less, and
REM: 0.020% or less,
the balance being Fe and incidental impurities.

3. The electric resistance welded steel pipe according to claim 1 or 2, wherein a steel microstructure at half the wall thickness of the base metal zone has:

an average grain size of 15.0 $\mu$m or less; and
steel microstructures at a location 1 mm deep from the inner surface of the electric resistance weld, at a location 1 mm deep from the outer surface of the electric resistance weld, at a location 1 mm deep from the inner surface of the base metal zone, and at a location 1 mm deep from the outer surface of the base metal zone each have: a number density of high-KAM value regions having a KAM value of 3.0 or more and 5.0 or less of 1000 regions/mm$^2$ or more, and an area ratio of high-KAM value regions having an equivalent circular diameter of 5.0 $\mu$m or more of 0.050 or less.

4. A line pipe using the electric resistance welded steel pipe described in claim 1 or 2.

5. A line pipe using the electric resistance welded steel pipe described in claim 3.

# FIG. 1

A ～

O ～

VICKERS INDENTATION

B ～

D ～

C ～

ELECTRIC RESISTANCE
WELDED STEEL PIPE

B ～

D ～

O、A、C ～

O' ～

# FIG. 2

ELECTRIC RESISTANCE WELD

VICKERS INDENTATION

1 mm

1 mm

20 mm   20 mm

# FIG. 3

VICKERS INDENTATION

1 mm

1 mm

40 mm

# FIG. 4

1    2    3

## INTERNATIONAL SEARCH REPORT

| International application No. |
| --- |
| **PCT/JP2023/034007** |

**A. CLASSIFICATION OF SUBJECT MATTER**

*C22C 38/00*(2006.01)i; *C21D 8/10*(2006.01)i; *C21D 9/08*(2006.01)i; *C22C 38/58*(2006.01)i; *C22C 38/60*(2006.01)i
FI: C22C38/00 301F; C21D8/10 C; C21D9/08 D; C21D9/08 F; C22C38/00 301Z; C22C38/58; C22C38/60

According to International Patent Classification (IPC) or to both national classification and IPC

**B. FIELDS SEARCHED**

Minimum documentation searched (classification system followed by classification symbols)

C22C38/00; C21D8/10; C21D9/08; C22C38/58; C22C38/60

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 6-235045 A (NIPPON STEEL CORP.) 23 August 1994 (1994-08-23)<br>entire text, all drawings | 1-5 |
| A | JP 8-225849 A (SUMITOMO METAL INDUSTRIES, LTD.) 03 September 1996 (1996-09-03)<br>entire text, all drawings | 1-5 |
| A | JP 8-73941 A (SUMITOMO METAL INDUSTRIES, LTD.) 19 March 1996 (1996-03-19)<br>entire text, all drawings | 1-5 |
| A | JP 2006-274347 A (SUMITOMO METAL INDUSTRIES, LTD.) 12 October 2006 (2006-10-12)<br>entire text, all drawings | 1-5 |
| A | JP 2022-35868 A (JFE STEEL CORP.) 04 March 2022 (2022-03-04)<br>entire text, all drawings | 1-5 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 November 2023** | **12 December 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/034007**

| Patent document cited in search report | | | Publication date (day/month/year) | Patent family member(s) | Publication date (day/month/year) |
|---|---|---|---|---|---|
| JP | 6-235045 | A | 23 August 1994 | (Family: none) | |
| JP | 8-225849 | A | 03 September 1996 | (Family: none) | |
| JP | 8-73941 | A | 19 March 1996 | (Family: none) | |
| JP | 2006-274347 | A | 12 October 2006 | (Family: none) | |
| JP | 2022-35868 | A | 04 March 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6521197 B

- JP 2017179482 A